# EUROPEAN PATENT APPLICATION

(11) **EP 2 881 900 A1**
(43) Date of publication of application: **10.06.2015**
(21) Application number: 13290307.1
(22) Date of filing: 09.12.2013
(51) Int. Cl.: G06Q 10/02, G06Q 30/02

(54) **Automated refund of electronic miscellaneous document (EMD)**

(71) Applicant: Amadeus S.A.S., 06410 Biot (FR)
(72) Inventor: Collendavelloo, Yan, Haymarket, NSW 2000 (AU); Laffitte, Anatole, 06370 Mouans-Sartoux (FR); Vernet, Jérôme, 06270 Villeneuve Loubet (FR); Philippon, Jeremy, 06520 Magagnosc (FR); Donadio, Jean-Noel, 06410 Biot (FR); Idir, Nassim, 06220 Vallauris (FR); Romero, Isabelle, 06130 Grasse (FR)
(74) Representative: Samson & Partner Patentanwälte mbB

(57) **Abstract**

A method, apparatus and program product automatically perform a refund operation for an Electronic Miscellaneous Document (EMD). Both a pricing engine and a Form of Payment (FOP) service may be accessed when performing a refund operation to determine both the amount of the refund and the manner in which the refund should be applied to one or more FOP's, and optionally based upon one or more refund policy rules specified by a travel provider. In addition, a status of an EMD may be accessed and used to automatically determine the refundability of the service or services associated with an EMD. By doing so, the required expertise, training and/or effort of the end user, as well as the likelihood of miscalculations when performing an EMD refund operation often may be reduced.

## Description

### Field of the Invention

Embodiments of the invention relate generally to computers and computer software, and more specifically, to the use of same to apply refunds in the travel industry.

### Background of the Invention

Computer reservations systems are used in the travel industry to store and retrieve information and conduct transactions related to air travel, rail travel, hotels, car rental, and other travel-related activities. An important component of such systems is related to ticketing, which is the process of issuing and managing tickets, the documents issued by travel providers to confirm a traveler's purchase of a travel product such a seat on a flight on an aircraft. Documents managed by an electronic ticketing system for use with air travel, for example, may include paper tickets, electronic tickets (e-tickets), and Electronic Miscellaneous Documents (EMD's), the latter of which are used to document ancillary revenue for services such as excess baggage fees, on-board food and services, and other services that are beyond the scope of the an electronic ticket for a flight between an origin and a destination.

In some instances, however, a traveler may not consume all of the services associated with a document (e.g., a ticket or EMD), so many computer reservations systems support functionality for processing refunds of all or a portion of the services associated with a document. Refund operations, in particular, are used to return, to the owner of a document, the remaining value associated with any unused travel-related services associated with the document, and typically, to renounce the unused travel-related services (e.g., to permit another traveler to book a seat that has been refunded for another traveler).

Processing a refund, however, has often been a difficult and time consuming operation, even for skilled travel or provider agents. Travel providers often apply penalties for refunds, and in some instances, refunds may have tax implications that complicate the calculation of the appropriate amount to refund to a traveler. Travelers may also use multiple forms of payment to pay for a ticket, further complicating the manner in which a refund is returned to the traveler. In many instances, refunds are governed by travel provider rules, e.g., as defined by Airline Tariff Publishing Company (ATPCO) Category 33.

Furthermore, some refund operations are more complex than others, and introduce additional difficulties to the process. As one example, some refunds are associated with EMD's, which are for services that are ancillary to the travel services defined by a primary electronic or paper ticket document. EMD's, like e-tickets and paper tickets, may have multiple coupons, and may also be subject to refunds after a portion of an itinerary has been completed. In addition, multiple forms of payment may be associated with an EMD, and penalties may apply in different scenarios based upon travel provider rules. Refund policies, however, may differ from those of e-tickets and the like, so additional complexity is often present when attempting to perform a refund for an EMD.

Therefore, a significant need exists in the art for improved handling of refund operations for travel-related documents, and in particular, travel-related documents associated with EMD's.

### Summary of the Invention

The invention addresses these and other problems associated with the prior art by providing in one aspect a method, apparatus and program product that automatically perform a refund operation for an Electronic Miscellaneous Document (EMD). In some embodiments consistent with the invention, for example, both a pricing engine and a Form of Payment (FOP) service may be accessed when performing a refund operation to determine both the amount of the refund and the manner in which the refund should be applied to one or more FOP's, and optionally based upon one or more refund policy rules specified by a travel provider. In addition, a status of an EMD may be accessed and used to automatically determine the refundability of the service or services associated with an EMD. By doing so, the required expertise, training and/or effort of the end user, as well as the likelihood of miscalculations when performing an EMD refund operation often may be reduced.

Therefore, consistent with one aspect of the invention, an automated refund for an EMD may be performed by automatically determining, using at least one processing unit, a refund amount for the EMD based upon a status of the EMD and monetary information associated with the EMD, and automatically applying the determined refund amount to at least one FOP associated with the EMD.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there are described example embodiments of the invention.

### Brief Description of the Drawings

FIGURE 1 is a block diagram of a computer system configured to implement a refund service consistent with the invention.
FIGURE 2 is a block diagram of an example implementation of a computer system capable of implementing the refund service referenced in Fig. 1.
FIGURE 3 is an illustration of an example refund record for a travel document.
FIGURE 4 is a flowchart illustrating an example sequence of steps performed by the computer system referenced in Fig. 1 to perform an EMD refund operation consistent with the invention.
FIGURE 5 is an illustration of an example EMD.
FIGURE 6 is an illustration of an example EMD refund record prior to performing a refund operation.
FIGURE 7 is an illustration of the EMD refund record of Fig. 6 after performing an EMD refund operation consistent with the invention.

### Detailed Description

Embodiments consistent with the invention provide an automated refund operation for an Electronic Miscellaneous Document (EMD) issued by a travel provider such as an airline or other type of carrier. In some embodiments, both a pricing engine and a Form of Payment (FOP) service may be accessed when performing the refund operation to determine both the amount of the refund and the manner in which the refund should be applied to one or more FOP's, and optionally based upon one or more refund policy rules specified by a travel provider. In addition, a status of an EMD, e.g., based upon a coupon status for one or more coupons associated with the EMD, may be accessed and used to automatically determine the refundability of the service or services associated with an EMD. By doing so, the required expertise, training and/or effort of the end user, as well as the likelihood of miscalculations when performing an EMD refund operation often may be reduced.

Other variations and modifications will be apparent to one of ordinary skill in the art.

### Hardware and Software Environment

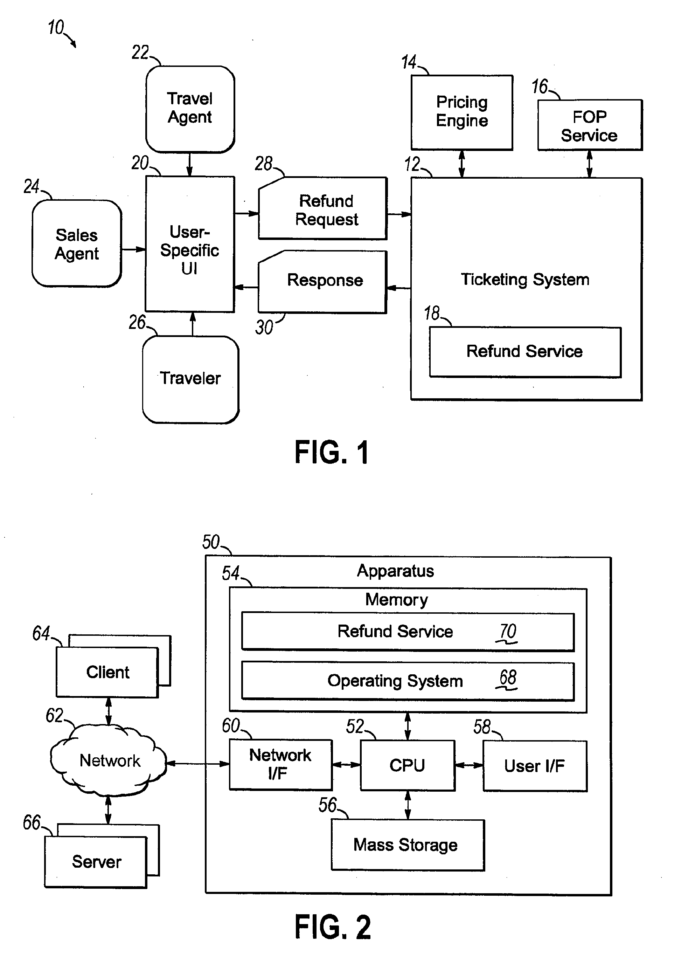

Turning now to the drawings, wherein like numbers denote like parts throughout the several views, Fig. 1 illustrates an example data processing system 10 in which a refund service consistent with the invention may be implemented. System 10 is illustrated as including a central service implemented as ticketing system 12, which is interfaced with various additional travel-related computer services, e.g., a pricing engine 14 and a Form of Payment (FOP) service 16, and within which is implemented a refund service 18. Pricing engine 14 primarily provides an ability to compute refund amounts for use in pricing a refund, while FOP service 16 primarily provides access to various forms of payment for use in applying a refund to a customer's form of payment. Ticketing system 12 may be implemented, for example, as an electronic ticketing server (ETS) for use in manipulating electronic tickets, including electronic miscellaneous documents (EMD's) associated with ancillary travel-related services. Refund service 18 is implemented within ticketing system 12, and may apply refunds according to one or more rules defined by associated airlines and accessed through a fare publication service such as the Airline Tariff Publishing Company (ATPCO).

It will be appreciated that systems 12, 14, 16 and/or 18 may be combined in some implementations and may be implemented within the same or in different computer systems. Moreover, systems 12, 14, 16 and/or 18 may be operated and/or managed by the same or different entities, e.g., a travel provider or a third party that supports multiple travel providers.

System 12 may be accessible by a number of different types of users through one or more user-specific user interfaces 20, e.g., travel agents 22, sales agents 24 acting on behalf of a travel provider, and travelers 26. It will be appreciated that for different types of users, different user interfaces may be provided, e.g., where a traveler 26 may interact through a simplified web-based interface that requires less expertise than would be assumed for an agent 22, 24. In some embodiments, however, user access may be limited only to agents, or in some embodiments, only to travelers. Users may issue refund requests 28 to ticketing system 12 through user interface 20, and may in turn receive responses 30. User interface 20 may be graphically based, e.g., based upon a web standard such as HTML, or using other interface architectures known in the art, e.g., other client-server interface architectures. Additional administration interfaces may also be supported consistent with the invention. In addition, in some implementations only travel provider representatives may be provided with access to system 12, whereby no access by agents 22 would be supported.

System 12 may be implemented in a number of manners consistent with the invention. Fig. 2, for example, illustrates an example apparatus 50 within which various steps from a refund operation may be implemented in a manner consistent with the invention. For the purposes of the invention, computer 50 may represent practically any type of computer, computer system or other programmable electronic device. Moreover, computer 50 may be implemented using one or more networked computers, e.g., in a cluster or other distributed computing system, or may be implemented within a single computer or other programmable electronic device, e.g., a desktop computer, laptop computer, handheld computer, cell phone, set top box, etc.

Computer 50 typically includes a central processing unit 52 including at least one microprocessor coupled to a memory 54, which may represent the random access memory (RAM) devices comprising the main storage of computer 50, as well as any supplemental levels of memory, e.g., cache memories, non-volatile or backup memories (e.g., programmable or flash memories), read-only memories, etc. In addition, memory 54 may be considered to include memory storage physically located elsewhere in computer 50, e.g., any cache memory in a processor in CPU 52, as well as any storage capacity used as a virtual memory, e.g., as stored on a mass storage device 56 or on another computer coupled to computer 50. Computer 50 also typically receives a number of inputs and outputs for communicating information externally. For interface with a user or operator, computer 50 typically includes a user interface 58 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 50 may also include one or more mass storage devices 56, e.g., a floppy or other removable disk drive, a hard disk drive, a direct access storage device (DASD), an optical drive (e.g., a CD drive, a DVD drive, etc.), and/or a tape drive, among others. Furthermore, computer 50 may include an interface 60 with one or more networks 62 (e.g., a LAN, a WAN, a wireless network, and/or the Internet, among others) to permit the communication of information with other computers and electronic devices, e.g., one or more client computers 64 (e.g., for interfacing with agents 22, 24 and travelers 26) and one or more servers 66 (e.g., implementing systems 14, 16, and 18 and engine 20). It should be appreciated that computer 50 typically includes suitable analog and/or digital interfaces between CPU 52 and each of components 54, 56, 58 and 60 as is well known in the art. Other hardware environments are contemplated within the context of the invention.

Computer 50 operates under the control of an operating system 68 and executes or otherwise relies upon various computer software applications, components, programs, objects, modules, data structures, etc., e.g., a refund service 70. Moreover, various applications, components, programs, objects, modules, etc. may also execute on one or more processors in another computer coupled to computer 50 via network 62, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by computer 50. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

### EMD Refund

Refund of a travel-related document (e.g., an e-ticket, a paper ticket or an EMD) is performed to return to the owner of the document any remaining value to which the owner is due, along with renouncing the corresponding travel-related services (e.g., flights or ancillary services) so that the owner can no longer redeem those services. Generally, the outcome of a refund operation is that the corresponding value is given back to a customer and the corresponding document is flagged as refunded such that it is no longer usable by the customer.

In the embodiments discussed below, refund operations associated with air travel are described, and as such, a travel provider may be an airline. It will be appreciated, however, that the invention may be utilized in connection with other types of travel providers, travel services and forms of travel, including, without limitation, trains, buses, hotels, cruises, and ancillary services related thereto.

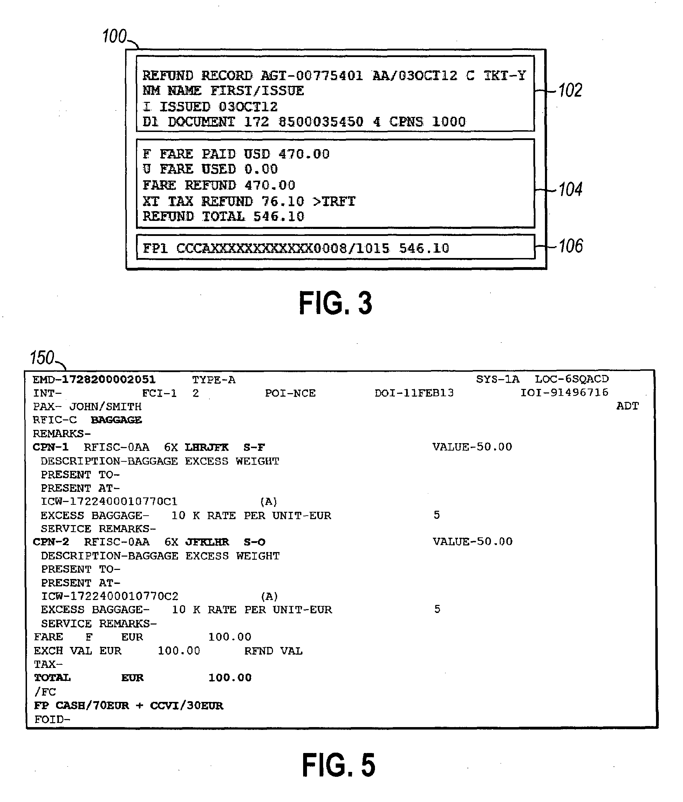

A refund operation in one embodiment may be split into two primary steps: initialing a refund and committing the refund. Fig. 3, for example, illustrates an example refund panel 100 that may be presented to a user such as a travel agent or travel provider agent (e.g., an airline or gate agent) when performing a refund operation, in this case for an e-ticket document or EMD document.

Panel 100 includes a header 102, which generally includes an agent sign, a date, a traveler name, a date of issue, and a document number. In addition, an upper part 104 of panel 100 details the amounts to be refunded (e.g., fare, tax, penalty, etc...), according to fare rules established by travel providers, as well as coupon statuses (e.g., based on whether coupons are fully unused or partially used). A lower part 106 details one or more Forms of Payment (FOP's) on which the refunded amount will be re-credited to a customer.

Initiation of a refund operation generally includes population of panel 100 to determine an amount to be refunded and Forms of Payment (FOP) on which the amount will be re-credited to a customer, followed by committing the refund operation, which is a confirmation and processing of the refund, accompanied by document updates (sales, coupon statuses, etc.), booking updates, monetary transfers, etc.

Population of upper part 104 of panel 100 may be performed in some embodiments in a number of different manners. For example, population may be based solely on document data, which is used to pre-populate fields in a best effort mode. As a consequence, this does not cover any calculation or penalty determination. Therefore, in many cases, manual updates are expected from agents to update amounts, add penalties. Alternatively, fare filings may be made in a pricing engine and combined with document data, allowing for a more automated population of amounts involved in a refund.

Population of lower part 106 may be based on FOP's identified in a document being refunded and may be expected to be manually updated by an agent in order to adapt their corresponding amounts to be in line with the amount to be refunded.

Embodiments consistent with the invention may be used to automate refunds for EMD's, and in many cases avoiding the need to perform any updates or computations on the upper part of an EMD refund panel. From the perspective of an EMD, this often means that calculations, filing checks in ATPCO Category 33 and penalty/fee determinations are fully automated, thereby saving an agent or other user from the need to calculate/deduce amounts related to the flown part of an associated e-ticket or paper ticket (if any). Therefore, in many cases the training and required expertise of agents and other users is reduced, and the amount of time required to process refunds is often reduced.

Furthermore, in some embodiments FOP's may be managed in a manner that does not restrict refunds to only the FOP(s) contained in a document being refunded. An FOP service, which may return all FOP's involved in a document lifetime (including in previous documents, e.g., in case several exchanges have taken), may automatically distribute an amount to be refunded to various FOP's and updated amounts.

Among the benefits provided by the herein-described EMD refund process is enhancing the scope of automated document refunds, particularly given that whenever a refund is requested of a primary document such as an e-ticket or paper ticket, it is likely that a refund will also be requested for any supporting documents such as EMD's. In addition, simplification and automation of the refund process may, in some embodiments, facilitate the implementation of online refunds directly to customers, rather than through agents.

Implementation of an EMD refund process addresses a number of complexities. Generally, when refunding an EMD, rules/filing (e.g., ATPCO Cat33) need to be checked in order to determine refund conditions. In addition, cancellation penalties or any eventual fees have to be determined. Such operations are not straightforward and are error-prone, particularly when handled manually by inexperienced or untrained agents. In general, refundability and cancellation penalties may be determined by accessing fare notes, e.g., by identifying fare conditions and fare data of an EMD to be refunded, consulting fare notes and rules for that fare basis, and then determining a cancellation penalty in accordance with fare notes and rules. However, mistakes in such determinations, when performed manually by an agent, may result in a need to perform an ADM (Agency Debit Memo), and if the revenue accounting system of an airline detects that a wrong penalty has been applied, it may issue and ADM and address it to a travel agency, exposing a travel agency to penalties.

One complexity relates to partially-used EMD's. An EMD, just like an e-ticket, may include several coupons. For instance, a customer travelling from Nice to Sydney via Singapore may decide to purchase an extra baggage allowance for the whole of the trip. To that effect, an EMD with 2 coupons (NCE-SIN & SIN-SYD) may be issued, and it may be the case that after a customer travels to Singapore, the traveler may request a refund of the SIN-SYD portion/coupon of the EMD. In that case, the amount to be refunded may be computed on the basis of the unused portion of the EMD, as well as any cancellation penalties. Thus, in order to implement the EMD refund in one embodiment of the invention, the computation may be performed by (1) identifying the fare basis of the EMD to be refunded; (2) consulting the fare notes and rules for that fare basis (e.g., fares filed by travel providers through ATPCO); and (3) determining the amount 'consumed' in accordance with the fare notes and rules. Thus, for the above example, a typical rule that could apply is that the used amount is computed by pricing the same EMD on a one-way NCE-SIN flight, such that the amount to be refunded would be computed as the amount paid minus the cost of an extra baggage allowance for the NCE-SIN flight.

Another complexity relates to Form of Payment (FOP), which identifies how a document had originally been paid, e.g., cash, credit card credentials, or check. When a document is to be refunded, the FOP(s) attached to this document are generally displayed as-is in the refund panel, and conventionally, a manual intervention is required to update these FOP's to specify the amount to be refunded to a customer. In the case of a credit card FOP, this may also allow the customer's credit card to be credited with the amount to be refunded.

The sum of the amount contained by each of multiple FOP's generally has to be equal to the amount to be refunded (refund total amount). In case several FOP's are present, the refund total amount may be distributed on the various FOP's arbitrarily, again conventionally via a manual action, and often presenting a user with the difficulty of choosing what amount to credit on which FOP. Generally there is no consistency in the way the distribution is done for a given airline or travel agency, and whiles some airlines may prefer some particular credit card scheme over another one, others may prefer to refund by check, on a particular reusable voucher, gift card, travel fund, or airline specific traveler account. Moreover, some FOP may no longer be usable as of the time of refund, e.g. an expired or canceled credit card, and conventionally such circumstances would need to be manually detected and the expired/canceled FOP removed from the list of FOP's being considered. Also, it may be the case that the document to be refunded results from an exchange of a previous document, and in that case, the FOP's used in that previous document are not available, while they may still be relevant.

Embodiments consistent with the invention may address the aforementioned complexities through the use of an automated EMD refund process that includes in part an automatic determination of the amount of refund to be calculated for an EMD. The automatic determination of the amount of refund may be based at least in part on a status of the EMD and monetary information associated with the EMD, and may include an automatic determination of the used portion of an EMD, as well as an automatic determination of any cancellation penalty, and in many cases relying on a pricing engine or service to provide all relevant information used to make such determinations. In addition, embodiments consistent with the invention may automatically apply the determined refund amount to at least one Form of Payment (FOP).

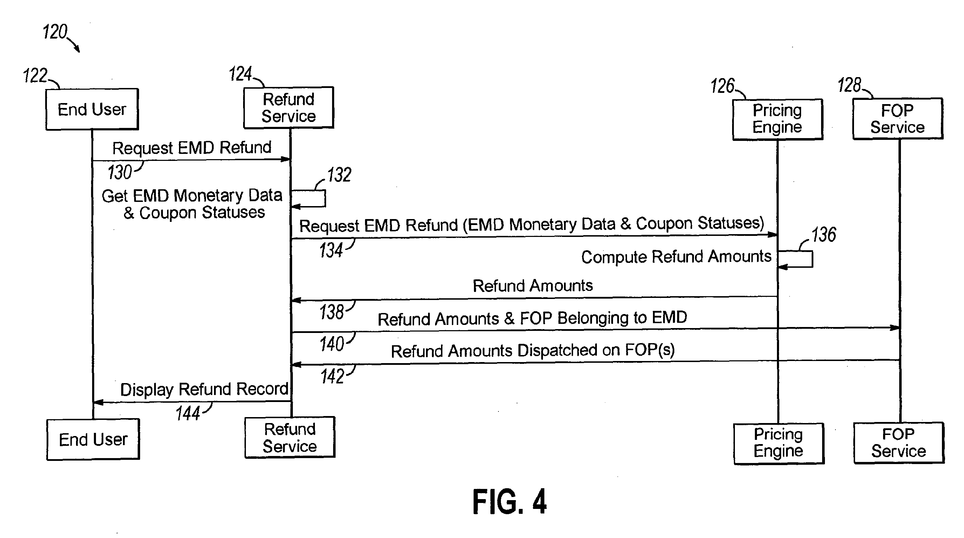

Fig. 4 illustrates an example implementation of an EMD refund operation capable of being implemented in data processing system 10 of Fig. 1, and showing the interaction of an end user 122 with a refund service 124 having access to a pricing engine 126 and FOP service 128. In response to an EMD refund request 130, refund service 124 may perform preliminary checks by retrieving monetary data linked to the pricing of the EMD and associated coupon statuses, as illustrated at 132. Also, at this time, EMD coupon eligibility checks may be performed to ensure that at least one coupon is still available for refund and also that the coupon status combination is eligible to the refund computation.

In this regard, the monetary data or information that may be accessed may include the cost or fare for each service associated with each EMD coupon, the payment or payments made by the customer or traveler, the forms of payment used to make the payments, the types of currency, etc. Alternatively, some or all of the monetary data may be determined by the pricing engine (e.g., fare paid, fare used, taxes paid, taxes used, penalties, etc.)

Similarly, the status of an EMD may be based on the status of each EMD coupon (i.e., a "coupon status"), or even a status of each service associated with an EMD coupon, and may identify, for example, whether a service has or has not been consumed or used by the traveler. Thus, for example, after a traveler has flown one segment of a multi-segment flight, any services such as baggage fees associated with the flown segment will be considered consumed for the purposes of calculating a refund amount, while other services associated with another segment that has not yet been flown by the traveler may be considered unconsumed services. Thus, the refund service is able to make an automatic determination as to whether an EMD is refundable based at least in part on the monetary information (e.g., service fares or costs) and statuses associated with the EMD and the individual coupons and/or services associated therewith.

Moreover, it will be appreciated that an EMD may be associated with one or more services that are ancillary to travel via a travel provider, and may include services such as of baggage services, meal services, pet services, miscellaneous fees or services, surface transportation services, airport services, merchandise purchases, Internet or online access services, in-flight services, or practically any other type of service that is ancillary to travel and capable of being monetized. Further, while the embodiments discussed herein are focused on air travel via one or more airlines, it will be appreciated that the invention is not limited solely to air travel, and may be utilized in connection with refunding ancillary services for other types of travel.

Next, as illustrated at 134, the refund service requests an EMD refund with pricing engine 126 by transmitting coupon statuses and monetary data to the pricing engine, resulting in calculation of refund amounts and generation of a response including the calculated amounts back to refund service 124 as illustrated at 136 and 138. The pricing engine has access to one or more refund policy rules that may be associated with particular travel providers (e.g., an airline may file refund policy rules as refund records with ATPCO) such that the pricing engine can compute, based upon the coupon statuses and monetary data provided by refund service 124, a refund amount, as well as any tax refunds and/or cancellation penalties to be applied to the refund. In some embodiments, a refund policy rule may also be usable to deny a refund for a particular service.

The aforementioned data may then be used by refund service 124 to build or populate the upper part or portion of a refund record that may be displayed to the end user, including information such as fare paid, fare used, fare refund, taxes paid, taxes used, nonrefundable taxes, refundable taxes, penalty and/or refund total.

In addition, in some embodiments, since the refund amounts are calculated in an automatic manner by a pricing engine, the amounts may be considered guaranteed, such that a travel agent, for example, may not be subject to any Agency Debit Memo (ADM) as a result of any miscalculations in a refund amount.

Next, as illustrated at 140 in Fig. 4, once monetary refund-related amounts are computed by the pricing engine, then those amounts and the FOP(s) associated with the EMD may be transmitted to FOP service 128. FOP service 128 may then, based on one or more refund FOP rules that may be defined by a travel provider, return to the refund service refund amounts dispatched on one or more FOP's, including, for example, refunded FOP type(s) (e.g., credit card, cash, check, etc.), and associated amounts, as illustrated at 142.

Thereafter, refund service 124 may build or populate the lower part or portion of the refund record and return to the end user (as illustrated at 144) a consolidated refund record display including a header along with the upper and lower parts. Of note, the refund display step may simply be informative in some embodiments, and the end user may have the ability to ignore or confirm an initiated refund transaction, such that after confirmation, open EMD coupons may be updated to a refunded status and a refund transaction may be inserted in a sales report database. The confirmation step in such embodiments may be used to ensure settlement of refund amounts and update of an EMD to a final status (such that the EMD cannot be used by the traveler after the refund). In other embodiments, however, no confirmation may be required.

Figs. 5-7 next illustrate an example of an EMD refund operation consistent with the invention. Fig. 5, in particular, illustrates an example EMD 150 including two coupons, a first (CPN-1) associated with a flight from LHR (Heathrow) to JFK (John F. Kennedy) and having a coupon status of "flown," and a second (CPN-2) associated with a return flight from JFK to LHR and having a coupon status of "open." Each coupon is for an baggage excess weight service charged at a rate of 50 EUR, for a total cost of 100 EUR for both coupons, and payment was made using two FOP's, 70 EUR cash and 30 EUR credit card (CCVI).

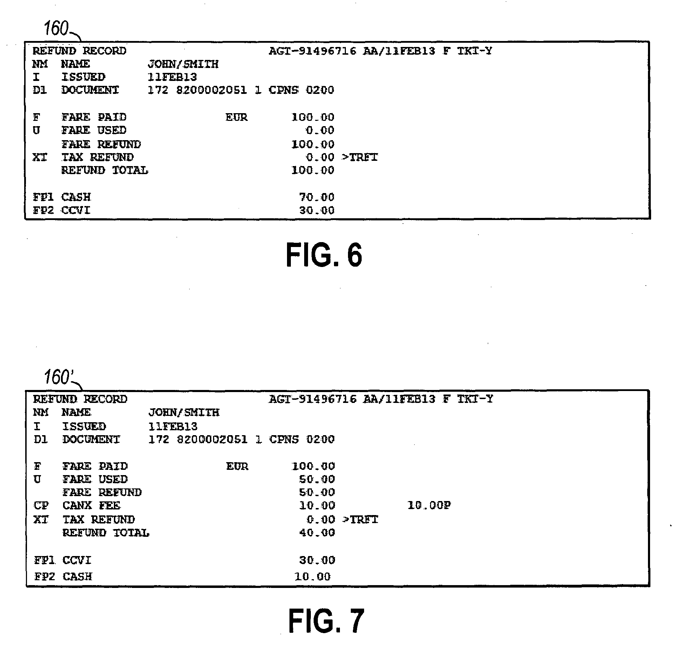

Fig. 6 next illustrates an example refund record 160 prior to determination of a refund, e.g., as might be requested by a customer/traveler after flying the first segment and finding that on the return segment the customer/traveler's luggage no longer requires an excess weight service. Assume that refund policy rules for the travel provider exist that specify (1) a 10 EUR cancelation fee for refunding excess weight services, and (2) that refunds should be applied first to a credit card (up to the total originally charged to the credit card) prior to refunding cash. With a conventional manual refund operation, an agent would be presented with a refund record such as illustrated in Fig. 6, and would be required to intervene and manually determine the proper cancellation penalty based upon travel provider rules, apply the proper cancelation penalty, determine the amount of fare used and the total amount of the refund, and determine the amounts of the total refund to allocate to various FOP's. Manual intervention, however, may require substantial expertise and/or training, a substantial amount of agent time, and may present a risk of miscalculation.

In contrast, as illustrated in Fig. 7, performance of an EMD refund operation in the manner described herein results in an automatic determination of the monetary information and status associated with the EMD, an access to both a pricing engine and an FOP service to determine both the amount to refund and how the refund amount should be applied, and the generation of a refund record 160' including identification of the consumed/used (50 EUR) and unconsumed/unused (40 EUR) amounts, the required cancelation fee of 10 EUR, no tax refund, and the refund total of 40 EUR. In addition, refund record 160' indicates application of the refund first to the credit card FOP for the original amount of 30 EUR, with the remaining balance of 10 EUR returned in cash. The refund record 160' may be generated with little or no agent involvement, and given the access to a pricing engine, amounts may be guaranteed, thereby reducing the required expertise/training, reducing end user effort, and reducing the likelihood of miscalculations.

According to one aspect, the present automated EMD refund system is defined by:
at least one processing unit;
   a pricing engine configured to calculate a refund amount for an EMD based upon monetary information and a status associated with the EMD, and a refund policy defined by a travel provider;
   a Form of Payment, FOP, service configured to determine portions of the refund amount to apply to multiple FOP's associated with the EMD based upon at least one refund FOP rule; and
   a refund service executed by the at least one processing unit, the refund service configured to, in response to an end user request for a refund: determine a coupon status for each of a plurality of EMD coupons associated with the EMD, wherein the coupon status indicates whether a service associated with the EMD coupon has been consumed;
determine a fare for the service associated with each EMD coupon;
access the pricing engine using the determined status and fare;
receive the refund amount from the pricing engine;
generate a refund record for display to the end user based upon the received refund amount, the refund record indicating any fare paid, fare used, fare refund, taxes paid, taxes used, nonrefundable taxes, refundable taxes, penalty and refund total associated with the EMD; and
access the FOP service using the refund amount and the multiple FOP's to apply the refund amount to the multiple FOP's.

According to another aspect, the present automated EMD refund system is defined by the following points:
1. An apparatus, comprising:
   at least one processing unit; and
   program code configured upon execution by the at least one processing unit to perform an automated refund for an Electronic Miscellaneous Document, EMD, by automatically determining a refund amount for the EMD based upon a status of the EMD and monetary information associated with the EMD, and automatically applying the determined refund amount to a Form of Payment, FOP, associated with the EMD.
2. The apparatus of point 1, wherein the EMD is associated with a plurality of services that includes at least one consumed service and at least one unconsumed service, wherein the status of the EMD is based at least in part on which among the plurality of services is consumed or unconsumed, and wherein the determined refund amount is based on a cost of the at least one unconsumed service among the plurality of services.
3. The apparatus of point 1 or point 2, wherein the monetary information includes the cost of the at least one service, wherein the EMD is associated with a refund policy rule, and wherein the program code is configured to automatically determine the refund amount based upon the cost of the at least one service and the refund policy rule.
4. The apparatus of any of points 1 to 3, wherein the program code is configured to automatically determine the refund amount by accessing a pricing engine using the status of the EMD and the monetary information and receiving the refund amount from the pricing engine, wherein the refund amount is calculated by the pricing engine based on the status of the EMD and the monetary information, wherein the pricing engine includes a refund policy rule, and wherein the pricing engine calculates the refund amount based upon the refund policy rule, wherein the refund amount is guaranteed.
5. The apparatus of any of points 1 to 4, wherein the program code is configured to automatically apply the determined refund amount to the FOP associated with the EMD by accessing a FOP service using the refund amount and the FOP, wherein the FOP service applies first and second portions of the refund amount to first and second FOP's associated with the EMD based on at least one refund FOP rule.

It will be appreciated that some of the features of the example embodiments of this invention may be used without the corresponding use of other features. In addition, various additional modifications may be made without departing from the spirit and scope of the invention. Therefore, the invention lies in the claims hereinafter appended.

## Claims

1. A method of performing an automated refund for an Electronic Miscellaneous Document, EMD, comprising:
automatically determining, using at least one processing unit, a refund amount for the EMD based upon a status of the EMD and monetary information associated with the EMD; and
automatically applying the determined refund amount to at least one Form of Payment, FOP, associated with the EMD.

2. The method of claim 1, wherein the EMD is associated with a plurality of services that includes at least one consumed service and at least one unconsumed service, wherein the status of the EMD is based at least in part on which among the plurality of services is consumed or unconsumed, and wherein the determined refund amount is based on a cost of the at least one unconsumed service among the plurality of services.

3. The method of claim 1 or claim 2, wherein the EMD includes a plurality of EMD coupons, wherein each of the plurality of services is associated with an EMD coupon among the plurality of EMD coupons, and wherein the status of the EMD is based upon a coupon status for each EMD coupon.

4. The method of any of claims 1 to 3, wherein a first service among the plurality of services is selected from the group consisting of a baggage service, a meal service, a pet service, a miscellaneous fee or service, a surface transportation service, an airport service, a merchandise purchase, online access service, or an in-flight service.

5. The method of any of the preceding claims, wherein the monetary information includes a cost of the at least one service, wherein the EMD is associated with a refund policy rule, and wherein automatically determining the refund amount is based upon the cost of the at least one service and the refund policy rule.

6. The method of any of the preceding claims, wherein automatically determining the refund amount includes:
accessing a pricing engine using the status of the EMD and the monetary information; and
receiving the refund amount from the pricing engine, wherein the refund amount is calculated by the pricing engine based on the status of the EMD and the monetary information.

7. The method of claim 6, wherein the pricing engine includes at least one refund policy rule, and wherein the pricing engine determines if the EMD is refundable and, if so, calculates the refund amount based upon the refund policy rule.

8. The method of any of the preceding claims, further comprising populating a refund record for the EMD, the refund record including a fare paid, a fare used, a fare refund, taxes paid, taxes used, nonrefundable taxes, refundable taxes, a penalty and a refund total.

9. The method of claim 8, wherein the refund record includes an upper part and a lower part, the upper part including the fare paid, fare used, fare refund, taxes paid, taxes used, nonrefundable taxes, refundable taxes, penalty and refund total, and the lower part including an amount and an FOP type to which the amount is applied for at least one FOP.

10. The method of claim 8 or claim 9, further comprising:
displaying the refund record to an end user, the refund record further including a header, the upper part and the lower part; and
after applying the determined refund amount, updating at least one open coupon associated with the EMD to a refunded state and inserting a refund transaction in a sales report database.

11. The method of any of the preceding claims, wherein automatically applying the determined refund amount to the FOP associated with the EMD includes accessing a FOP service using the refund amount and the FOP.

12. The method of claim 11, wherein the FOP service applies first and second portions of the refund amount to first and second FOP's associated with the EMD based on at least one refund FOP rule.

13. The method of any of the preceding claims, wherein the refund amount is guaranteed.

14. An apparatus, comprising:
at least one processing unit; and
program code configured upon execution by the at least one processing unit to perform an automated refund for an Electronic Miscellaneous Document, EMD, by automatically determining a refund amount for the EMD based upon a status of the EMD and monetary information associated with the EMD, and automatically applying the determined refund amount to a Form of Payment, FOP, associated with the EMD.

15. A program product, comprising:
a non-transitory computer readable medium; and
program code stored on the non-transitory computer readable medium and configured upon execution by at least one processing unit to perform an automated refund for an Electronic Miscellaneous Document, EMD, by automatically determining a refund amount for the EMD based upon a status of the EMD and monetary information associated with the EMD, and automatically applying the determined refund amount to a Form of Payment (FOP) associated with the EMD.
